# EUROPEAN PATENT APPLICATION

(11) **EP 4 546 543 A1**
(43) Date of publication of application: **30.04.2025**
(21) Application number: 24824732.2
(22) Date of filing: 26.11.2024
(51) Int. Cl.: H01M 50/446, H01M 50/449

(54) **SEPARATOR HAVING LOW PORE CLOSURE TEMPERATURE AND PREPARATION METHOD THEREFOR**

(30) Priority: 07.04.2024 CN 202410405858
(71) Applicant: Shanghai Energy New Materials Technology Co., Ltd., Shanghai 201399 (CN)
(72) Inventor: LIU, Lianjing, Pudong New Area Shanghai 201399 (CN); XIONG, Lei, Pudong New Area Shanghai 201399 (CN); YAN, Luoxia, Pudong New Area Shanghai 201399 (CN); YANG, Xu, Pudong New Area Shanghai 201399 (CN); CUI, Ruyu, Pudong New Area Shanghai 201399 (CN); ZHUANG, Zhi, Pudong New Area Shanghai 201399 (CN); CHENG, Yue, Pudong New Area Shanghai 201399 (CN)
(74) Representative: Ipside
(86) International application number: PCT/CN2024/134424
(87) International publication number: WO 2025/056095

(57) **Abstract**

The present invention provides a separator having a low pore-closing temperature, including a base membrane containing an unbranched polyolefin and a long-branched polyolefin, and a coating formed on at least one surface of the base membrane and containing a heat-sensitive high molecular material. By the aforesaid solution, the present invention can substantially lower the pore-closing response time and pore-closing temperature of the separator, thus improving the safety performance of lithium ion batteries. In addition, the present invention further provides a method for preparing the aforesaid separator having a low pore-closing temperature and a battery containing the aforesaid separator having a low pore-closing temperature.

## Description

### TECHNICAL FIELD

The present invention relates to the correlated technical field of lithium battery separators and further relates to a separator having a low pore-closing temperature and a preparation method therefor, thereby improving the safety performance of lithium batteries.

### BACKGROUND

During charging and discharging processes, lithium batteries, especially high-energy density lithium batteries have continuously increased internal temperature with the continuous redox reaction of positive and negative electrodes; and an explosion will occur in the inner part of the battery due to thermal runaway, leading to security issues. As one of the four major indispensable components in the inner part of a battery, separators function in preventing short circuits of batteries and accelerating the transmission of lithium ions. When the internal temperature of a battery increases quickly, a separator is rapidly melted to close pores to block lithium ions from passing through and terminate the internal reaction of the battery quickly, thereby avoiding the explosion of the battery. Therefore, separators have a lower pore-closing temperature and are of very significance to the safety of lithium batteries.

The separator having a low pore-closing temperature has been prepared by introducing low-melting point materials into a polyolefin material at present; the method can reduce the pore-closing temperature of the separator, but the pore-closing response time is slow, and a lot of heat will be accumulated in the inner part of the battery to cause thermal runaway due to film breaking after closing pores of the separator. Further, a composite PP/PE/PP separator has been prepared by co-extrusion of three layers, and the pore-closing temperature of the obtained separator is merely equivalent to the melting point of the PE; moreover, the poor compatibility between PP and PE is a problem to be considered. Moreover, a low-melting point polymer has been coated on the surface of a polyolefin base membrane; however, when battery temperature rises, the low-melting point polymer is expanded to block off the pores on the outer surface of the base membrane, thus achieving the effect of lowering the pore-closing temperature of a separator. However, as for the separator prepared in such a way, when the battery temperature further rises, the low-melting point polymer on the surface of the base membrane will be vaporized to produce bubbles and suffer bubble breakage, causing the re-exposure of the blocked pores and leading to a pore closing failure.

### SUMMARY

The present invention aims at lowering the pore-closing temperature and pore-closing response time of the existing separators, thereby enhancing the automatic power-off function of batteries and improving the safety performance of batteries.

To achieve the aforesaid purpose, according to the present invention, a separator substrate is prepared via linear polyethylene without a branched structure and polyethylene having a long-branched structure in certain proportions by means of a wet film-forming method. A layer of a heat-sensitive material is coated on the surface of the separator substrate to achieve the effects of lowering the pore-closing temperature and pore-closing response time.

Therefore, a first aspect of the present invention is to provide a separator having a low pore-closing temperature, including a base membrane containing an unbranched polyolefin and a long-branched polyolefin, and a coating formed on at least one surface of the base membrane and containing a heat-sensitive high molecular material.

For example, the coating further includes: a ceramic particle and a binder.

For example, the unbranched polyolefin is unbranched polyethylene, and the long-branched polyolefin is long-branched polyethylene.

For example, the heat-sensitive high molecular material is one or more of polyacrylamide crosslinked by N,N'-methenyl-bisacrylamide, a polyolefin wax-maleic anhydride grafted copolymer emulsion, polyvinyl chloride, polyacrylic acid-acrylamide, and poly-N-isopropylacrylamide.

For example, a mass ratio of the unbranched polyolefin to the long-branched polyolefin is (5-9):(1-5).

For example, a mass ratio of the heat-sensitive high molecular material to the ceramic particle is (1-5):(5-9).

For example, the long-branched polyethylene has a degree of branching of not lower than 10/1000C.

For example, the base membrane has a pore diameter of 0.01 µm-1 µm; and/or, the base membrane has a porosity of not lower than 30%; and/or, the base membrane has a pore diameter concentration ratio of not lower than 80%.

For example, the separator having a low pore-closing temperature closes at least 30% of pores at 100°C; and/or, a time to completely close the pores by the separator having a low pore-closing temperature is less than 1 min at 130°C.

For example, the separator having a low pore-closing temperature has an air permeability value higher than an air permeability value of the base membrane, and a difference between the air permeability value of the separator having a low pore-closing temperature and the air permeability value of the base membrane is less than 10 s/100 mL.

A second aspect of the present invention is to provide a method for preparing the aforesaid separator having a low pore-closing temperature, including: mixing the unbranched polyolefin with the long-branched polyolefin, and performing melt extrusion by a twin-screw extruder into a casting piece to obtain the base membrane; coating a paste containing the heat-sensitive high molecular material onto a surface of the base membrane, and drying the paste to form the coating.

A third aspect of the present invention is to provide a battery including a positive electrode, a negative electrode, and the aforesaid separator having a low pore-closing temperature; the separator having a low pore-closing temperature is located between the positive electrode and the negative electrode.

The present invention is to prepare the base membrane by a separator wet process using linear unbranched polyethylene and nonlinear long-branched polyethylene as raw materials, and then to coat a heat-sensitive material on the surface of the base membrane and dry the surface. The separator prepared by such a method can substantially lower the pore-closing response time and pore-closing temperature of the separator, thus improving the safety performance of lithium ion batteries.

### BRIEF DESCRIPTION OF THE DRAWINGS

FIG. 1 is a schematic diagram showing a separator having a low pore-closing temperature according to the present invention; and
FIG. 2 is a flow diagram showing a preparation method for the separator having a low pore-closing temperature according to the present invention.

### DETAILED DESCRIPTION OF EMBODIMENTS

The detailed embodiments of the present invention will be specified with reference to the accompanying drawings below. It should be understood that the detailed embodiments described here are merely for the specification and interpretation of the present invention, but are not construed as limiting the present invention.

Endpoints and any values within the ranges disclosed herein are all not limited to the precise ranges or values; these ranges or values should be interpreted as containing the values approaching thereof. As for numerical ranges, endpoint values of each range, endpoint values and separate point values of each range, as well as separate point values, may be combined with each other to obtain one or more new numerical ranges, and these numerical ranges shall be regarded as detailed disclosure herein.

According to the present invention, a heat-sensitive material is utilized and polyethylene is coated to form the separator having a low pore-closing temperature. Specifically, the linear polyethylene without a branched structure and the polyethylene having a long-branched structure make up a substrate of the separator. When the battery temperature rises, the polyethylene having a long-branched structure has the property of a low melting point to close the internal pores of the separator; the heat-sensitive material coated on the substrate of the separator may close the pores on the surface of the separator, which may thus effectively and quickly reduce the pore-closing response time and pore-closing temperature of the separator, and prevent a phenomenon of thermal runaway caused by film breaking of the separator due to further increase of the battery temperature, thereby greatly improving the safety performance of lithium batteries.

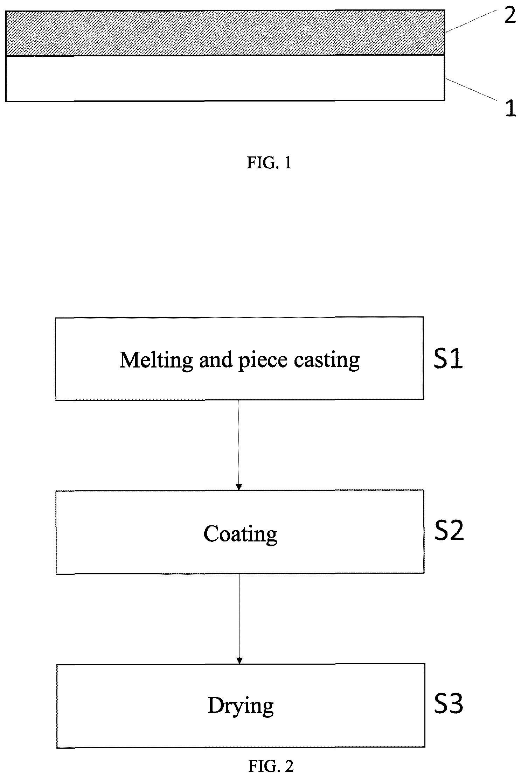

Please refer to FIG. 1. The separator having a low pore-closing temperature of the present invention includes a base membrane (1) containing an unbranched polyolefin and a long-branched polyolefin, and a coating (2) formed on at least one surface of the base membrane (1) and containing a heat-sensitive high molecular material.

Firstly, the base membrane (1) is discussed below. The base membrane (1) may be a wet memebrane. The pore diameter of the base membrane (1) may be 0.01 µm-1µm, for example, 0.01 µm, 0.05 µm, 0.1 µm, 0.2 µm, 0.3 µm, 0.4 µm, 0.5 µm, 0.6 µm, 0.7 µm, 0.8 µm, 0.9 µm, or 1 µm. The porosity of the base membrane (1) may be not lower than 30%, for example, not lower than 30%, 35%, 40%, 45%, 50%, 55%, or 60%. The pore diameter concentration ratio of the base membrane (1) may be not lower than 80%, for example, not lower than 80%, 81%, 82%, 83%, 84%, 85%, 86%, 87%, 88%, 89%, or 90%. In addition, the mass ratio of the unbranched polyolefin to the long-branched polyolefin may be (5-9):(1-5), for example, 5:1, 5:2, 5:3, 5:4, 5:5, 6:1, 6:2, 6:3, 6:4, 6:5, 7:1, 7:2, 7:3, 7:4, 7:5, 8:1, 8:2, 8:3, 8:4, 8:5, 9:1, 9:2, 9:3, 9:4, or 9:5. An example of the unbranched polyolefin may be unbranched polyethylene, and an example of the long-branched polyolefin may be long-branched polyethylene. The degree of branching of the long-branched polyethylene may be not lower than 10/1000C, for example, not lower than 10/1000C, 11/1000C, 12/1000C, 13/1000C, 14/1000C, 15/1000C, 16/1000C, 17/1000C, 18/1000C, 19/1000C, or 20/1000C.

The coating (2) is then discussed below. An example of the heat-sensitive high molecular material may be one or more of polyacrylamide crosslinked by N,N'-methenyl-bisacrylamide, a polyolefin wax-maleic anhydride grafted copolymer emulsion, polyvinyl chloride, polyacrylic acid-acrylamide, and poly-N-isopropylacrylamide. The particle size of the heat-sensitive high molecular material may be 0.1 µm-10 µm, for example, 0.1 µm, 0.5 µm, 1 µm, 2 µm, 3 µm, 4 µm, 5 µm, 6 µm, 7 µm, 8 µm, 9 µm, or 10 µm. To further impart better performance for the separator, the coating (2) may further contain a ceramic particle and a binder. An example of the ceramic particle may be one or more of alumina and boehmite; an example of the binder may be a polyacrylate binder. The mass ratio of the heat-sensitive high molecular material to the ceramic particle may be (1-5):(5-9), for example, 1:5, 1:6, 1:7, 1:8, 1:9, 2:5, 2:6, 2:7, 2:8, 2:9, 3:5, 3:6, 3:7, 3:8, 3:9, 4:5, 4:6, 4:7, 4:8, 4:9, 5:5, 5:6, 5:7, 5:8, or 5:9.

Finally, the separator having a low pore-closing temperature is discussed below. The separator having a low pore-closing temperature may close at least 30% of pores at 100°C; and close at least, for example, 30%, 35%, 40%, 45%, 50%, 55%, 60%, 65%, 70%, 75%, 80%, 85%, 90%, 95%, or 100% of pores. The separator having a low pore-closing temperature may close at least 60% of pores at 110°C; and close at least, for example, 60%, 65%, 70%, 75%, 80%, 85%, 90%, 95%, or 100% of pores. The separator having a low pore-closing temperature may close at least 80% of pores at 120°C; and close at least, for example, 80%, 85%, 90%, 95%, or 100% of pores. The separator having a low pore-closing temperature may close at least 90% of pores at 130°C; and close at least, for example, 90%, 95%, or 100% of pores. It needs to be supplemented that the "percentage of pore closure" mentioned above refers to a percentage of the porosity at a specific temperature to the porosity at room temperature (25°C). In addition, the time to completely pores by the separator having a low pore-closing temperature may be less than 1 min at 130°C. It needs to be supplemented that the "time to completely pores" refers to the time that the porosity lowers to 0% from room temperature (25°C) to a specific temperature. Moreover, the separator having a low pore-closing temperature has an air permeability value higher than an air permeability value of the base membrane (1), and a difference between the air permeability value of the separator having a low pore-closing temperature and the air permeability value of the base membrane (1) is less than 10 s/100 mL. Thus as can be seen, it indicates that the coating (2) is coated and formed on the base membrane (1) to possibly cause a slight increase in the air permeability value of the separator under such conditions.

Please refer to FIG. 2. The method for preparing the separator having a low pore-closing temperature according to the present invention includes: melting and piece casting (S1), coating (S2), and drying (S3).

During melting and piece casting (S1), the unbranched polyolefin and the long-branched polyolefin are mixed and melt-extruded by a twin-screw extruder into a casting piece to obtain the base membrane. A pore-forming agent white oil and an antioxidant may be additionally added during mixing the unbranched polyolefin and the long-branched polyolefin. The pore-forming agent white oil may enable the base membrane to generate pores for gas permeation, and the antioxidant may avoid the yellowing caused by oxidation of the base membrane. In addition, cooling, stretching, and extracting may be performed additionally after melt extrusion to form the casting piece. Cooling may solidify the base membrane; stretching may enable the base membrane to produce pores or reduce internal stress, and extracting may remove the pore-forming agent white oil and antioxidant in the base membrane.

During the coating (S2), a paste containing a heat-sensitive high molecular material may be coated onto a surface of the base membrane. In addition, the paste may further include: a ceramic particle and a binder. With mass of the paste as a standard, the content of the binder may be 0.1 wt%-1wt%, for example, 0.1 wt%, 0.2 wt%, 0.3 wt%, 0.4 wt%, 0.5 wt%, 0.6 wt%, 0.7 wt%, 0.8 wt%, 0.9 wt%, or 1 wt%. The coating may be performed in ways such as roller painting, blade coating, spraying, or spin coating.

During the drying (S3), the paste is dried to form a coating.

It needs to be indicated that the materials mentioned herein may be referring to the related illustration of the separator mentioned previously. Moreover, the technical core of the preparation method of the present invention lies in materials instead of parameters. Hence, given that step details are not disclosed specifically, those skilled in the art may understand and achieve the present invention.

In conclusion, the separator of the present invention has low pore-closing temperature and short pore-closing response time and thus, is suitable for blocking positive and negative electrodes of batteries. On this basis, the battery of the present invention includes a positive electrode, a negative electrode, and the separator of the present invention; the separator of the present invention is located between the positive electrode and the negative electrode.

The following examples are utilized to further specify the present invention:

### Example 1

The used long-branched polyethylene has a degree of branching of 10/1000C; and the heat-sensitive high molecular material has a particle size of 0.5 µm.

The separator was prepared as follows: an unbranched polyethylene powder and a long-branched polyethylene powder were mixed in a mass ratio of 7:3, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Example 2

The used long-branched polyethylene has a degree of branching of 10/1000C; and the heat-sensitive high molecular material has a particle size of 0.5 µm.

The separator was prepared as follows: an unbranched polyethylene powder and a long-branched polyethylene powder were mixed in a mass ratio of 5:5, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Example 3

The used long-branched polyethylene has a degree of branching of 10/1000C; and the heat-sensitive high molecular material has a particle size of 0.5 µm.

The separator was prepared as follows: an unbranched polyethylene powder and a long-branched polyethylene powder were mixed in a mass ratio of 3:7, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Example 4

The used long-branched polyethylene has a degree of branching of 15/1000C; and the heat-sensitive high molecular material has a particle size of 0.5 µm.

The separator was prepared as follows: an unbranched polyethylene powder and a long-branched polyethylene powder were mixed in a mass ratio of 7:3, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Example 5

The used long-branched polyethylene has a degree of branching of 20/1000C; and the heat-sensitive high molecular material has a particle size of 0.5 µm.

The separator was prepared as follows: an unbranched polyethylene powder and a long-branched polyethylene powder were mixed in a mass ratio of 7:3, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Example 6

The used long-branched polyethylene has a degree of branching of 10/1000C; and the heat-sensitive high molecular material has a particle size of 0.5 µm.

The separator was prepared as follows: an unbranched polyethylene powder and a long-branched polyethylene powder were mixed in a mass ratio of 7:3, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 5:5; and the binder accounted for 0.1 wt% of the total amount of the paste.

### Example 7

The used long-branched polyethylene has a degree of branching of 10/1000C; and the heat-sensitive high molecular material has a particle size of 0.5 µm.

The separator was prepared as follows: an unbranched polyethylene powder and a long-branched polyethylene powder were mixed in a mass ratio of 7:3, melt-mixed and extruded with a pore-forming agent white oil and an antioxidant into a casting piece by a twin-screw extruder, and then cooled, stretched, and extracted to form a base membrane. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 7:3; and the binder accounted for 0.1 wt% of the total amount of the paste.

### Comparative Example 1

The separator was prepared as follows: an unbranched polyethylene powder was melt-mixed and extruded with a pore-forming agent white oil and an antioxidant into a casting piece, and then cooled, stretched, and extracted to form a base membrane as a separator.

### Comparative Example 2

The used long-branched polyethylene has a degree of branching of 10/1000C.

The separator was prepared as follows: an unbranched polyethylene powder and a long-branched polyethylene powder were mixed in a mass ratio of 7:3, melt-mixed and extruded with the pore-forming agent white oil and the antioxidant into a casting piece by a twin-screw extruder, and then cooled, stretched, and extracted to form a base membrane as a separator.

### Comparative Example 3

The separator was prepared as follows: an unbranched polyethylene powder was melt-mixed and extruded with a pore-forming agent white oil and an antioxidant into a casting piece, and then cooled, stretched, and extracted to form a base membrane as a separator. A mixed paste consisting of a heat-sensitive high molecular material, a ceramic particle, and a binder was coated on any surface of the prepared base membrane, and then dried to obtain a separator; the mass ratio of the added heat-sensitive high molecular material to the added ceramic particle was 2:8; and the binder accounted for 0.1 wt% of the total amount of the paste.

### Test characterization

Pore-closing temperature: testing was performed by a heating internal resistance process; a sample was cut into a fixed size, and put in the middle of two clamps; an electrolyte solution was introduced at both sides of the sample, then heated and charged. A variation curve of the resistance with the increase of the sample temperature was exported according to a data processing system; the temperature corresponding to the mutative point within the interval was set as the pore-closing temperature of the sample.

Air permeability value: it was tested by an Oken-type air permeability value tester GB/T 36363-2018.

Porosity: the separator was taken out after testing its pore-closing temperature; the sample thickness and grammage were measured in accordance with GB/T 36363-201 with the formula of ε=1-S/(T*0.957), S: sample grammage with a unit of g/m²; T: sample thickness with a unit of µm; ε: porosity with a unit of %.

**Table 1**

| | | Examp le 1 | Examp le 2 | Examp le 3 | Examp le 4 | Examp le 5 | Examp le 6 | Examp le 7 | Comp arative Examp le 1 | Comp arative Examp le 2 | Comp arative Examp le 3 |
|---|---|---|---|---|---|---|---|---|---|---|---|
| Unbranched polyethylene: long-branched polyethylene (Mass ratio) | | 7:3 | 5:5 | 3:7 | 7:3 | 7:3 | 7:3 | 7:3 | 1:0 | 7:3 | 1:0 |
| Degree of branching of the long-branched polyethylene (Pcs./1000C) | | 10 | 10 | 10 | 15 | 20 | 10 | 10 | 0 | 10 | 0 |
| Heat-sensitive high molecular material: ceramic particle (Mass ratio) | | 2:8 | 2:8 | 2:8 | 2:8 | 2:8 | 5:5 | 7:3 | 0 | 0 | 2:8 |
| Particle size of the heat-sensitive high molecular material (µm) | | 0.5 | 0.5 | 0.5 | 0.5 | 0.5 | 0.5 | 0.5 | 0 | 0 | 0.5 |
| Air permeability value (s/100mL) | | 106 | 105 | 108 | 106 | 105 | 124 | 128 | 105 | 102 | 108 |
| Pore-closing temperature (°C) | | 132.1 | 130.5 | 128.9 | 127.9 | 126.6 | 126.5 | 125.7 | 139.5 | 135.8 | 136.2 |
| 60 s after high-temperat ure treatment at 130°C | Porosity (%) | 0 | 8 | 12 | 0 | 0 | 0 | 0 | 18 | 16 | 17 |
| | Air permeability value (s/100mL) | 1×10⁵ | 8×10³ | 6×10³ | 1×10⁵ | 1×10⁵ | 1×10⁵ | 1×10⁵ | 6×10³ | 6×10³ | 6×10³ |

It is specified according to the results of Table 1. Examples 1, 2, and 3 are compared with Comparative Example 1 to indicate that the pore-closing temperature of the separator decreases with the increase of the proportion of the long-branched polyethylene added. Examples 1, 4 and 5 are compared with Comparative Example 3 to indicate that the pore-closing temperature of the separator decreases with the increase of the degree of branching of polyethylene. This is because the degree of crystallization of the separator will decrease with the increase of the degree of branching such that the inner molecules of the separator are melted to close the inner pores during the increase of temperature.

Examples 1, 6, and 7 are compared with Comparative Example 2 to indicate that the increase of the content of the heat-sensitive high molecular material will effectively reduce the pore-closing temperature of the separator, but will increase the air permeability value (poorer air permeability). This is because the heat-sensitive high molecular material has a quick thermal response and may effectively close the pore structure on the surface of the separator. Moreover, 60 s after the high-temperature treatment at 130°C, the internal pores of the separator may be closed quickly; the porosity reduces to 0%, and the air permeability value increases rapidly.

As can be seen from the comparison between Comparative Example 1 and Comparative Example 2, after only a portion of the unbranched polyethylene is replaced by the long-branched polyethylene, the pore-closing temperature will decrease by 3.7°C, and the porosity after 60 s high-temperature treatment at 130°C will decrease by 2%, but the air permeability value after 60 s high-temperature treatment at 130°C is not affected. Moreover, as can be seen from the comparison between Comparative Example 1 and Comparative Example 3, the formation of the heat-sensitive material layer only will reduce the pore-closing temperature by 3.3°C, reduce the porosity after 60 s high-temperature treatment at 130°C by 1%, but will not affect the air permeability value after 60 s high-temperature treatment at 130°C. Further, as can be seen from the comparison between Example 1 and Comparative Example 1, when a portion of the unbranched polyethylene is replaced by the long-branched polyethylene and the heat-sensitive material layer is formed simultaneously, the pore-closing temperature will decrease by 7.4°C, and the porosity after 60 s high-temperature treatment at 130°C will decrease by 18%, while the air permeability value after 60 s high-temperature treatment at 130°C will increase by 9.4×10⁴ s/100 mL. Thus as can be seen, the replacement of partial unbranched polyethylene by the long-branched polyethylene and the formation of the heat-sensitive material layer will unexpectedly reduce the pore-closing temperature, reduce the porosity after 60 s high-temperature treatment at 130°C, and increase the air permeability value after 60 s high-temperature treatment at 130°C. In other words, besides unexpectedly lowering the pore-closing temperature, the replacement of partial unbranched polyethylene by the long-branched polyethylene and the formation of the heat-sensitive material layer will further unexpectedly reduce the pore-closing response time.

Any content involving common general knowledge will be not specified here, which could be understood by those skilled in the art.

What is described above are merely some detailed embodiments of the present, and are not construed as limiting the present invention. Any amendment, equivalent replacement, improvement, etc. made within the spirit and principle of the present invention shall fall within the scope of protection of the present invention. The technical scope of the present invention is not limited to the above content of the description and shall be determined according to the scope of the claims.

## Claims

1. A separator having low pore-closing temperature, comprising:
a base membrane comprising an unbranched polyolefin and a long-branched polyolefin, and
a coating formed on at least one surface of the base membrane and comprising a heat-sensitive high molecular material.

2. The separator having a low pore-closing temperature according to claim 1, wherein the coating further comprises a ceramic particle and a binder.

3. The separator having a low pore-closing temperature according to claim 1, wherein the unbranched polyolefin is unbranched polyethylene, and the long-branched polyolefin is long-branched polyethylene.

4. The separator having a low pore-closing temperature according to claim 1, wherein the heat-sensitive high molecular material is one or more of polyacrylamide crosslinked by N,N'-methenyl-bisacrylamide, a polyolefin wax-maleic anhydride grafted copolymer emulsion, polyvinyl chloride, polyacrylic acid-acrylamide, and poly-N-isopropylacrylamide.

5. The separator having a low pore-closing temperature according to claim 1, wherein a mass ratio of the unbranched polyolefin to the long-branched polyolefin is (5-9):(1-5).

6. The separator having a low pore-closing temperature according to claim 2, wherein a mass ratio of the heat-sensitive high molecular material to the ceramic particle is (1-5):(5-9).

7. The separator having a low pore-closing temperature according to claim 1, wherein the long-branched polyethylene has a degree of branching of not lower than 10/1000C.

8. The separator having a low pore-closing temperature according to claim 1, wherein the base membrane has a pore diameter of 0.01 µm-1 µm; and/or, the base membrane has a porosity of not lower than 30%; and/or, the base membrane has a pore diameter concentration ratio of not lower than 80%,

9. The separator having a low pore-closing temperature according to claim 1, wherein the separator having a low pore-closing temperature closes at least 30% of pores at 100°C; and/or, a time to completely close the pores by the separator having a low pore-closing temperature is less than 1 min at 130°C.

10. The separator having a low pore-closing temperature according to claim 1, wherein the separator having a low pore-closing temperature has an air permeability value higher than an air permeability value of the base membrane, and a difference between the air permeability value of the separator having a low pore-closing temperature and the air permeability value of the base membrane is less than 10 s/100 mL.

11. A method for preparing the separator having a low pore-closing temperature according to claim 1, comprising:
after mixing the unbranched polyolefin with the long-branched polyolefin, performing melt extrusion by a twin-screw extruder into a casting piece to obtain the base membrane;
coating a paste comprising the heat-sensitive high molecular material onto a surface of the base membrane, and
drying the paste to form the coating.

12. A battery comprising a positive electrode, a negative electrode, and the separator having a low pore-closing temperature according to claim 1, wherein the separator having a low pore-closing temperature is located between the positive electrode and the negative electrode.
